# EUROPEAN PATENT SPECIFICATION

(11) **EP 0 470 042 B1**
(45) Date of publication and mention of the grant of the patent: **08.05.1996**
(21) Application number: 91630048.6
(22) Date of filing: 23.07.1991
(51) Int. Cl.: C08F 236/04, C08F 2/44

(54) **Process for the preparation of a masterbatch rubber having polymer bound functionality**
Verfahren zur Herstellung eines Kautschukmasterbatches mit funktionellen Gruppen im Polymer
Préparation d'un mélange-mère d'un caoutchouc avec des groupes fonctionnels dans le polymère

(30) Priority: 02.08.1990 US 562062
(43) Date of publication of application: 05.02.1992
(73) Proprietor: THE GOODYEAR TIRE & RUBBER COMPANY, Akron, Ohio 44316-0001 (US)
(72) Inventor: Schulz, Gerald Owen, Stow, Ohio 44224 (US); Parker, Dan Kenton, Massillon, Ohio 44646 (US)
(74) Representative: Leitz, Paul

(56) References cited:
- US-A- 3 867 331
- US-A- 4 521 574

## Description

### Background of the Invention

The present invention relates to a process for preparing a masterbatch rubber containing polymer bound functionalities. More specifically, the present invention relates to a process for forming a polymer comprising the emulsion polymerization at a temperature ranging from about 40°C to 100°C of (a) at least one functionalized monomer that contains a polymerizable vinyl group with (b) at least one copolymerizable conjugated diene monomer, wherein the polymerization is conducted in the presence of a plasticizer that functions as a cosolvent/dispersing agent for the functionalized monomer during the emulsion polymerization reaction and as a plasticizer for the final polymer product.

Polymer bound functionalities, such as antidegradants, have been used in masterbatch rubber. The masterbatch rubber is blended down to the desired level with the rubber in which the antidegradant is intended to function. One route to prepare the masterbatch rubber involves the use of copolymerizable functionalized monomers. Many of these copolymerizable monomers are polar, high melting solids which are only slightly soluble in the copolymerizable diene monomers typically employed to prepare rubber. The solubility of these chemicals limits the level to which they can be polymerized and thus the extent to which they may be utilized in the masterbatch blending technique.

U.S. Patent Nos. 3,658,769, 3,767,628 and 4,213,892 describe the preparation of compounds such as N-(4-anilinophenyl) methacrylamide and N-(4-anilinophenyl) acrylamide and the polymerization of such compounds with typical monomers. These references suggest that a solvent such as methylethyl ketone or isopropyl alcohol may be required to obtain adequate solubility of the monomers as well as to solubilize other ingredients. Unfortunately, the use of cosolvents like methylethyl- ketone (MEK) and isopropyl alcohol is limited in emulsion polymerization systems due to the tendency of these solvents to destabilize latex particles resulting in partial coagulation or the formation of multiple phases.

US-A-4,521,574 discloses the use of dichloromethane (DCM) and/or tetrahydrofuran (THF) as cosolvents in an emulsion polymerization; however, DCM and THF have been determined to be a potential environmental and health concern.

US-A-4,701,507 discloses the use of methyl isobutyl ketone (MIBK) as a cosolvent in an emulsion polymerization; however, MIBK is also unsuitable in many applications due to its odor and volatile nature. In addition, the use of a solubilizing cosolvent while necessary to dissolve polar, solid copolymerizable monomers in the emulsion polymerization recipe, most often will require its complete removal and economical recycle upon completion of the reaction. The steps of cosolvent addition, removal and recycle make their use inconvenient and costly.

US-A-3,867,331 discloses a process for preplasticized vinyl resins by conducting the polymerization reaction of the vinyl monomer or monomers in the presence of a plasticizer therefor while employing an emulsion polymerization technique. In said polymerization reaction, the plasticizer and vinyl monomer or monomers are thoroughly mixed together prior to the start of the polymerization reaction.

### Summary of the Invention

The present invention relates to a process for the preparation of a masterbatch rubber having polymer bound functionality. The process comprises the emulsion polymerization at a temperature ranging from 40°C to 100°C of (a) at least one functionalized monomer that contains a polymerizable vinyl group; with (b) at least one copolymerizable conjugated diene monomer selected from the group consisting of butadiene-1,3, 2-chlorobutadiene-1,3, isoprene, piperylene and conjugated hexadienes; wherein the polymerization is conducted in the presence of from 10 to 70 parts of a plasticizer based on 100 parts by weight of total monomers.

### Detailed Description of the Invention

There is disclosed a process for forming a masterbatch rubber having polymer bound functionality comprising the emulsion polymerization at a temperature ranging from about 40°C to 100°C of:
(a) at least one functionalized monomer that contains an antidegradant moiety and a polymerizable vinyl group; with
(b) at least one copolymerizable conjugated diene monomer selected from the group consisting of butadiene-1,3, 2-chlorobutadiene-1,3, isoprene, piperylene and conjugated hexadienes;
wherein the polymerization is conducted in the presence of from 10 to 70 parts by weight of a plasticizer based on 100 parts by weight of total monomers; said plasticizer being selected from:
(A) carboxylic acid esters selected from the group consisting of diesters of triethylene glycol, dibutoxy ethoxy ethyl formate, dialkyl diether glutarate, dibutoxyethyl adipate, dibutoxyethoxyethyl adipate, di-2-ethylhexyl adipate, tetraethylene glycol diheptanoate, propylene glycol dibenzoate, dipropylene glycol dibenzoate, triethylene glycol dibenzoate, butyl octyl phthalate, dimethyl phthalate, diethyl phthalate, dibutyl phthalate, dibutoxy ethyl phthalate, di-2-ethylhexyl phthalate, tetraethylene glycol dioctoate, polyethylene glycol dioctoate, triethylene glycol di-2-ethylhexanoate, tetraethylene glycol di-2-ethylhexanoate, triethylene glycol caprate-caprylate, triethylene glycol di(caprate-caprylate), triethylene glycol dipelargonate, dibutyl sebacate, dibutoxyethyl sebacate, di-2-ethylhexyl sebacate, dioctyl sebacate, diethylene glycol mono-laurate and butoxyethyl oleate; or
(B) phosphates selected from the group consisting of 2-ethylhexyl diphenyl phosphate, iso-decyldiphenyl phosphate, tri-n-butyl phosphate, tri(2-ethylhexyl) phosphate, tributoxyethyl phosphate, tricresyl phosphate, trixylenyl phosphate and trixylyl phosphate; or
(C) formals selected from the group consisting of dibutoxyethoxy formal and di(butoxy-ethoxy-ethyl) formal; and
(D) N-butylbenzene sulfonamide.

The preferred carboxylic acid esters are polyethylene glycol dioctoate and a diester of triethylene glycol. The preferred phosphate is tributoxyethyl phosphate.

The above plasticizers are commercially available. Representative of the carboxylic acid esters that are sold commercially are Benzoflex™ 2-45, Benzoflex™ 9-88, Benzoflex™ 50, Benzoflex™ 284 and Benzoflex™ S-358 (from Velsicol Chemical), Polycizer™ DBS, Polycizer™ DBP, Polycizer™ DOA, and Polycizer™ DOP, Natro-Flex™ BCA, Plasticizer™ SC, Polycizer™ DOS (from Harwick); Hatcol™ DOA, Hatcol™ 154 and Hatcol™ DOS (from Hatco Chemical); Kodaflex™ DBPO, Kodaflex™ DEP, Kodaflex™ DMP, Kodaflex™ DOA, Kodaflex™ DOP, Kodaflex™ DOTP, Kodaflex™ HS-3, Kodaflex™ TE6-EH and Kodaflex™ TX1B (from Eastman Chemical); Merrol™ 3810, Merrol™ 4200, Merrol™ 4226, Merrol™ 4295, Merrol™ 4700, Merrol™ 4800, Merrol™ DBS and Merrol™ DOS (from Merrand); Monoplex™ DOA and Monoplex™ DOS, PlasHall™ 325, PlastHall™ 203, PlastHall™ 200, PlastHall™ 207, Plasthall™ 226, PlastHall™ DBS, PlastHall™ DOA, PlastHall™ DIOA, PlastHall™ DOZ, PlastHall™ DOS, PlastHall™ 83SS, PlastHall™ 7006, PlastHall™ 7041, PlastHall™ 7045 and PlastHall™ 4141; TeqMeR™ 803 and TeqMeR® 804 (from C. P. Hall); Nopalcol™ 1-L, Plastolein™ 9404TGP (from Henkel); Santicizer™ 160 from Monsanto; and SR-650 and SR-660 (from Sartomer), Flexol™ Plasticizer 4G0 (from Union Carbide).

Representative of the phosphates which are sold commercially are KP-140, Kronitex™ 50, Kronitex™ 100, TOF™ and TXP™ (from C. P. Hall), Lindol™, Phosflex™ 179A, Phosflex™ TBEP and Phosflex™ 179C (from Harwick); Phosflex™ 179, Phosflex™ 390 and Phosflex™ T-BEP (from Stauffer Chemical); Santicizer™ 141 and Santicizer™ 148 (from Monsanto).

Representative of the formals which are sold commercially are Merrol™ 4221 (from Merrand) and TP-908™ Plasticizer (from Morton International).

The above plasticizers function as a solvent and dispersing agent for the functionalized monomer in the polymerization, and as a plasticizer in the final polymer product. The level of plasticizer for use in the present invention may vary and ranges from 10 to 70 parts by weight of plasticizer per 100 parts by weight of total monomer, A range of from 15 to 50 is preferred, and a range of from 20 to 40 is particularly preferred.

Conventional hot emulsion recipes are employed with the present invention, however, some restrictions and modifications may arise either from the cosolvent, the copolymerizable monomer itself, or the polymerization parameters. Conventional ionic surfactants, known in the art, including sulfonate detergents and carboxylate soaps are useful in the instant invention. The level of ionic surfactant is computed based upon the total weight of the organic components (monomers plus cosolvents) and ranges from 2 to 30 parts by weight of ionic surfactant per 100 parts by weight of organic components with 4-25 parts by weight being more preferred and 5-12 parts by weight being most preferred. Those skilled in the art will appreciate that these levels are higher than usually used.

Free radical initiators known in the art are useful in the instant invention. However, initiators which are strong oxidizing agents, such as persulfate systems, should not be used with certain functionalized monomers, i.e., those functionalized monomers that contain moieties which are readily oxidizable. One example of such a functionalized monomer is N-(4-anilinophenyl) methacrylamide. Examples of free radical initiators that are useful in the practice of this invention are those known as "redox" initiators, such as combinations of chelated iron salts, sodium formaldehyde sulfoxylate and organic hydroperoxides. Representative of organic hydroperoxides are cumene hydroperoxide, paramenthane hydroperoxide and tertiary butyl hydroperoxide. "Azo" initiators, such as azobisisobutyronitrile are preferred.

Hot polymerization recipes are used. The temperature of the polymerization generally ranges from about 40°C to about 100°C. Preferably, the temperature of the polymerization ranges from about 45°C to about 80°C, with a range of from about 50°C to about 70°C being particularly preferred. Preferably the polymerization is carried out to complete monomer conversion in order to incorporate essentially all of the copolymerizable monomer. Incremental addition, or the use of high levels of a chair transfer agent may be necessary in order to avoid excessive gel formation. Incremental addition of the comonomer(s) may be necessary for complete incorporation of the copolymerizable monomer. Such minor modifications are within the skill of the artisan.

Examples of functionalized monomers that contain an antidegradant moiety and a polymerizable vinyl group are amides having the structural formula: 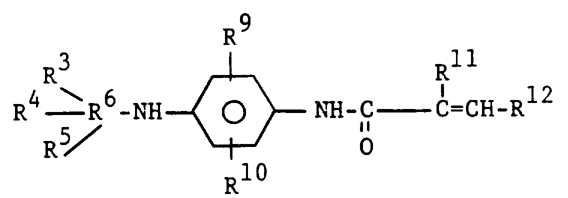 wherein R⁶ is an aryl radical, R³ and R⁴ are selected from the group consisting of hydrogen, alkyl radicals having from 1 to 4 carbon atoms and alkoxy radicals having from 1 to 4 carbon atoms, R⁵ is selected from the group consisting of hydrogen, alkyl radicals having from 1 to 4 carbon atoms, alkoxy radicals having from 1 to 4 carbon atoms and a radical having the following structural formula: 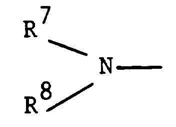 wherein R⁷ is selected from the group consisting of alkyl radicals having from 1 to 12 carbon atoms, cycloalkyl radicals having from 5 to 12 carbon atoms, aryl radicals having from 6 to 12 carbon atoms and aralkyl radicals having from 7 to 13 carbon atoms and R⁸ is selected from the group consisting of hydrogen and alkyl radicals having from 1 to 12 carbon atoms and wherein R⁹ and R¹⁰ are hydrogen or alkyl radicals having from 1 to 4 carbon atoms, R¹¹ is selected from the group consisting of hydrogen, methyl and ethyl; and R¹ is hydrogen or phenyl. Preferably R³ is hydrogen, R⁴ is hydrogen, R⁵ is hydrogen, R⁶ is an aryl radical having 6 carbon atoms, R⁹ is hydrogen, R¹⁰ is hydrogen, R¹¹ is hydrogen or an alkyl having 1 carbon atom and R¹ is hydrogen.

Other examples of functionalized monomers that contain an antidegradant moiety and a polymerizable vinyl group include imides selected from the group consisting of (1) compounds having the following structural formula: 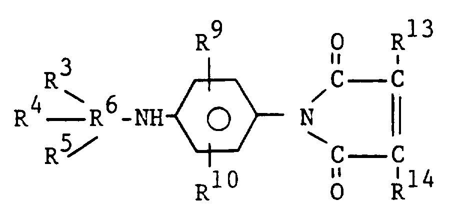 wherein R³, R⁴, R⁵, R⁹ and R¹⁰ are as previously defined herein under structural formula II and wherein R¹³ and R¹⁴ are selected from the group consisting of hydrogen and alkyl radicals having from 1 to 14 carbon atoms and (2) compounds having the following structural formula:

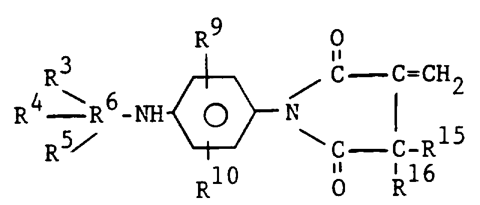

wherein R³, R⁴, R⁵, R⁶, R⁹ and R¹⁰ are as previously defined herein under structural formula I and wherein R¹⁵ and R¹⁶ are selected from the group consisting of hydrogen and alkyl radicals having from 1 to 4 carbon atoms. Preferably, R³ is hydrogen, R⁴ is hydrogen, R⁵ is hydrogen, R⁶ is an aryl having 6 carbon atoms, R⁹ is hydrogen, R¹⁰ is hydrogen, R¹³ is hydrogen, R¹⁴ is hydrogen, R¹⁵ is hydrogen, and R¹⁶ is hydrogen.

Additional examples of functionalized monomers that contain an antidegradant moiety and a polymerizable vinyl group include phenols of the structural formula: 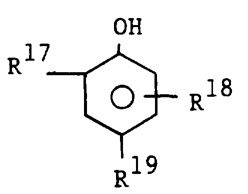 wherein R¹⁷ and R¹⁸ is a tert-alkyl radical having from 4 to 8 carbon atoms, R¹⁹ is selected from the group of radicals: 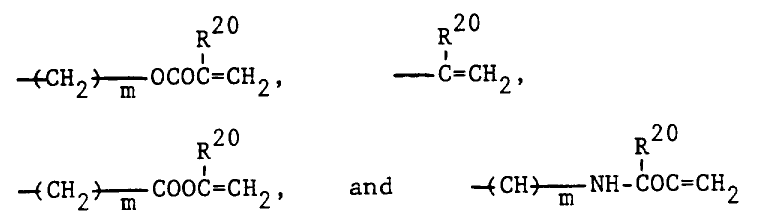 wherein R⁰ is hydrogen or methyl and m is 0 to 3. Preferably, R¹⁷ is tertiary alkyl having 4 carbon atoms, R¹⁸ is tertiary alkyl having 4 carbon atoms, R¹⁹ is: 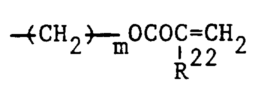 where m is 3 and R⁰ is methyl.

Additional functionalized monomers which contain an antidegradant moiety and a polymerizable vinyl group are compounds with the structural formula: 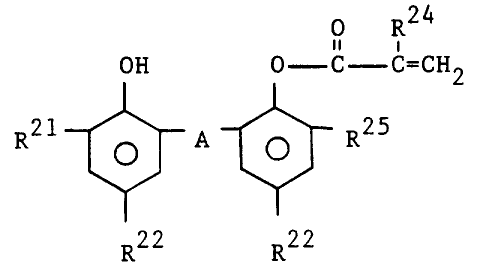 wherein R¹ and R are selected from n-alkyl radicals having from 1 to 18 carbon atoms and secondary alkyl radicals having from 3 to 18 carbon atoms and t-alkyl radicals having from 4 to 8 carbon atoms; R⁴ is H, CH₃ or C₂H₅ and A is selected from the radicals: -CH₂-, 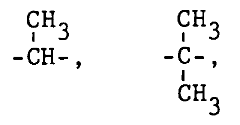 -S- and -O-. Preferably, R¹ is tert.alkyl having 4 carbon atoms, R is an n-alkyl having 1 carbon atom, R⁴ is hydrogen or CH₃ and A is -CH₂-.

Additional functionalized monomers which contain an antidegradant moiety and a polymerizable vinyl group are compounds with the structural formula: 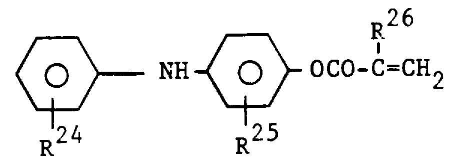 and 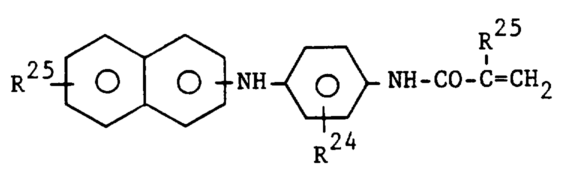 and 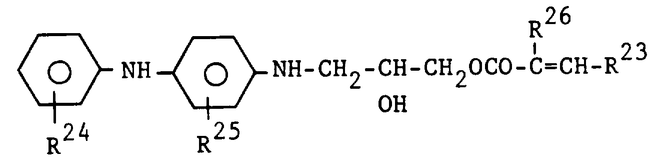 wherein each of R⁴ and R⁵ are alkyl radicals having from 1 to 4 carbon atoms, R⁶ is hydrogen or methyl and R³ is hydrogen or phenyl. Preferably, R⁴ is hydrogen, R⁵ is hydrogen, R⁶ is methyl, and R³ is hydrogen.

The aforementioned functionalized monomers may be polymerized by well known free radical polymerization techniques with one or more comonomers that are known to polymerize in free radical initiated polymerization systems. The polymerization is carried out in emulsion type systems. Some adjustments in the polymerization recipe and/or reaction conditions may be necessary to obtain a satisfactory rate of polymer formation, depending on the amount of functionalized monomer included and the other monomers involved. These adjustments should be minimal when using the process of the instant invention and would be within the skill of the artisan.

Comonomers that are used in the practice of this invention are conjugated diene monomers such as butadiene-1,3, 2-chlorobutadiene-1,3, isoprene, piperylene, and conjugated hexadienes. One may, in addition to the conjugated monomers, use a vinyl monomer such as styrene, α-methylstyrene, divinyl benzene, vinyl chloride, vinyl acetate, vinylidene chloride, methyl methacrylate, ethyl acrylate, vinylpyridine, acrylonitrile, methacrylonitrile, methacrylic acid, itaconic acid and acrylic acid. Mixtures of different functionalized monomers and mixtures of different comonomers may be used. The monomer charge ratio by weight is normally from 0.10/99.9 to 99.9/0.10 functionalized monomer/conjugated diene monomer (including any additional vinyl monomer). A charge ratio by weight of 5/95 to 80/20 is preferred with 10/90 to 40/60 the most preferred. According to one embodiment, the weight ratio of functionalized monomer to conjugated diene monomer to vinyl monomer may range from 5:75:20 to 95:5:0. Ratios will vary depending on the amount of rubber chemical functionality desired to be incorporated and on the reactivity ratios of the monomers in the particular polymerization system used.

The present invention has particular utility in preparing masterbatch polymers that have polymer bound functionalities. The polymer may contain from 5 parts to 70 parts by weight of the segmeric form of the functionalized monomer per 100 parts by weight of the polymer, although from 10 parts to 50 parts is normally satisfactory, with from 20 parts to 40 parts being preferred. The remainder of the polymer is comprised preferably of the segmeric form of at least one conjugated diene monomer and optionally the segmeric form of at least one vinyl monomer. Preferably, the polymers contain at least 30 percent by weight of the segmeric form of a conjugated diene with a range of from 50 to 90 percent being preferred and a range of from 60 to 80 percent being particularly preferred.

The process of the present invention has significant advantage over the processes of the prior art. For example, the process of the present invention avoids the use of cosolvents such as DCM and THF which may be hazardous. Use of the present invention also avoids the need for recovery of the organic solvent.

### Example 1

A series of 9.6 x 10⁻⁴m³ (thirty-two ounce) bottles were charged with the following per 100 parts by weight of total monomers (functionalized monomer plus conjugated diene monomer plus vinyl monomer). Total monomer charge was 100 grams.

| Ingredient | Parts |
|---|---|
| Water | 220.0 |
| Trisodium phosphate | 0.5 |
| Dehydrogenated rosin acid soap | 15.0 |
| Polymerized sodium alkyl naphtalene sulfonate | 0.5 |
| Azobisisobutyronitrile | 0.8 |
| Tert-dodecylmercaptan | 2.5 |

The water, trisodium phosphate and dehydrogenated rosin acid soap were charged. The pH was adjusted to 10.0 with aqueous KOH solution. The cosolvent was then charged with the functionalized monomer (antidegradant), tert.dodecyl mercaptan followed by azobisisobutyronitrile. Butadiene monomer was then added and the bottles were capped and rotated in a 60°C polymerization batch for 24 hours. The latices were cooled, filtered and volatiles (in the control) stripped in a rotary evaporator. Stripping was not necessary for Samples 2-4.

Table I sets out the level of the monomers (butadiene and functionalized monomer) and cosolvent added to the bottles in parts by weight per hundred parts by weight based on total monomers. KP-140 is tributoxyethyl phosphate marketed by C. P. Hall. Plasticizer™ SC is a diester of triethylene glycol marked by Harwick. Flexol™ Plasticizer 4G0 is polyethylene glycol dioctoate marketed by union Carbide. The functionalized monomer (AO) was N-(4-anilinophenyl) methacrylamide.

**Table I**

| Sample | AO | Butadiene | Cosolvent | Amt of Cosolvent |
|---|---|---|---|---|
| 1 | 20 | 80 | MIBK | 40 |
| 2 | 20 | 80 | KP-140 | 20 |
| 3 | 20 | 80 | KP-140 | 40 |
| 4 | 20 | 80 | Plasticizer™ SC | 40 |
| 5 | 20 | 80 | Flexol™ 4G0 | 40 |

The masterbatches were latex blended with Plioflex 1502 SBR (24% bound styrene) which is commercially available from The Goodyear Tire & Rubber Company. The masterbatches were blended to provide a 1.0 phr level of antioxidant. The blends were coagulated in isopropyl alcohol, dried and analyzed thermoxidatively with a temperature program of 2 deg C/min under a flow of oxygen. The onset temperatures of these blends appear in Table II.

**Table II**

| Sample | Onset Temperature °C |
|---|---|
| 1 | 193 |
| 2 | 199 |
| 4 | 196 |
| 5 | 196 |

## Claims

1. A process for forming a masterbatch rubber having polymer bound functionality comprising the emulsion polymerization at a temperature ranging from about 40°C to 100°C of:
(a) at least one functionalized monomer that contains an antidegradant moiety and a polymerizable vinyl group; with
(b) at least one copolymerizable conjugated diene monomer selected from the group consisting of butadiene-1,3, 2-chlorobutadiene-1,3, isoprene, piperylene and conjugated hexadienes;
wherein the polymerization is conducted in the presence of about 10 to about 70 parts by weight of a plasticizer based on 100 parts by weight of total monomers; said plasticizer being selected from:
(A) carboxylic acid esters selected from the group consisting of diesters of triethylene glycol, dibutoxy ethoxy ethyl formate, dialkyl diether glutarate, dibutoxyethyl adipate, dibutoxyethoxyethyl adipate, di-2-ethylhexyl adipate, tetraethylene glycol diheptanoate, propylene glycol dibenzoate, dipropylene glycol dibenzoate, triethylene glycol dibenzoate, butyl octyl phthalate, dimethyl phthalate, diethyl phthalate, dibutyl phthalate, dibutoxy ethyl phthalate, di-2-ethylhexyl phthalate, tetraethylene glycol dioctoate, polyethylene glycol dioctoate, triethylene glycol di-2-ethylhexanoate, tetraethylene glycol di-2-ethylhexanoate, triethylene glycol caprate-caprylate, triethylene glycol di(caprate-caprylate), triethylene glycol dipelargonate, dibutyl sebacate, dibutoxyethyl sebacate, di-2-ethylhexyl sebacate, dioctyl sebacate, diethylene glycol mono-laurate and butoxyethyl oleate; or
(B) phosphates selected from the group consisting of 2-ethylhexyl diphenyl phosphate, iso-decyldiphenyl phosphate, tri-n-butyl phosphate, tri(2-ethylhexyl) phosphate, tributoxyethyl phosphate, tricresyl phosphate, trixylenyl phosphate and trixylyl phosphate; or
(C) formals selected from the group consisting of dibutoxyethoxy formal and di(butoxy-ethoxy-ethyl) formal; and
(D) N-butylbenzene sulfonamide.

2. The process of claim 1 characterized in that the monomer charge ratio by weight of functionalized monomer to conjugated diene monomer ranges from 0.10 to 99.9 to 99.9 to 0.10.

3. The process of claim 1 characterized in that in addition to said functionalized monomer and said copolymerizable conjugated diene monomer, at least one vinyl monomer is polymerized, said vinyl monomer being selected from the group consisting of styrene, α-methylstyrene, divinylbenzene, vinyl chloride, vinyl acetate, vinylidene chloride, methyl methacrylate, ethyl acrylate, vinylpyridine, acrylonitrile, methacrylonitrile, methacrylic acid, itaconic acid and acrylic acid.

4. The process of claim 3 characterized in that the weight ratio of functionalized monomer to conjugated diene monomer to vinyl monomer may range from 5:75:20 to 95:5:0 parts per hundred parts based on total monomer.

5. A process according to claim 1 characterized in that at least one functionalized monomer is from the group consisting of (a) amides having the structural formula: 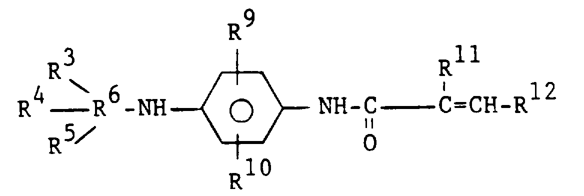 wherein R⁶ is an aryl radical, R³ and R⁴ are selected from the group consisting of hydrogen, alkyl radicals having from 1 to 4 carbon atoms and alkoxy radicals having from 1 to 4 carbon atoms, R⁵ is selected from the group consisting of hydrogen, alkyl radicals having from 1 to 4 carbon atoms, alkoxy radicals having from 1 to 4 carbon atoms and a radical having the following structural formula: 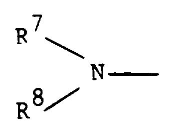 wherein R⁷ is selected from the group consisting of alkyl radicals having from 1 to 12 carbon atoms, cycloalkyl radicals having from 5 to 12 carbon atoms, aryl radicals having from 6 to 12 carbon atoms and aralkyl radicals having from 7 to 13 carbon atoms and R⁸ is selected from the group consisting of hydrogen and alkyl radicals having from 1 to 12 carbon atoms and wherein R⁹ and R¹⁰ are hydrogen or alkyl radicals having from 1 to 4 carbon atoms, R¹¹ is selected from the group consisting of hydrogen, methyl and ethyl; and
R¹ is hydrogen or phenyl; and (b) imides selected from the group consisting of (1) compounds having the following structural formula: 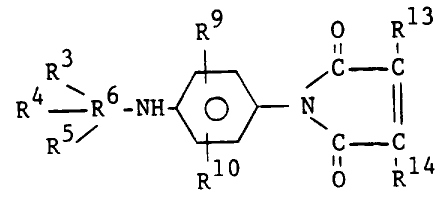 wherein R³, R⁴, R⁵, R⁹ and R¹⁰ are as previously defined herein under structural formula II and wherein R¹³ and R¹⁴ are selected from the group consisting of hydrogen and alkyl radicals having from 1 to 14 carbon atoms and (2) compounds having the following structural formula: 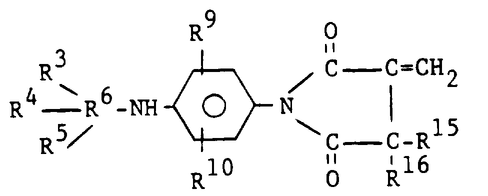 wherein R³, R⁴, R⁵, R⁶, R⁹ and R¹⁰ are as previously defined herein under structural formula I and wherein R¹⁵ and R¹⁶ are selected from the group consisting of hydrogen and alkyl radicals having from 1 to 4 carbon atoms.

6. A process according to claim 1 characterized in that the functionalized monomer is selected from the group of compounds represented by the structural formula: 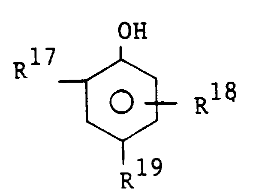 wherein R¹⁷ and R¹⁸ is a tert-alkyl radical having from 4 to 8 carbon atoms, R¹⁹ is selected from the group of radicals: 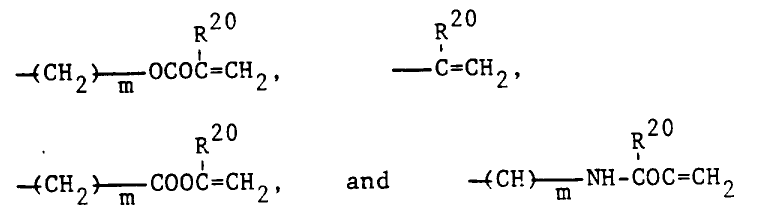 wherein R⁰ is hydrogen or methyl and m is 0 to 3; and compounds with the structural formula: 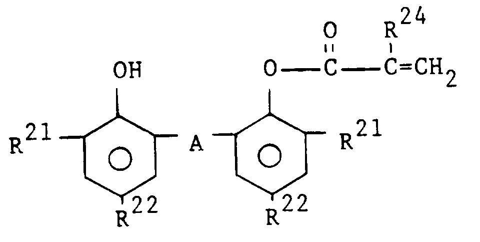 wherein R¹ and R are selected from n-alkyl radicals having from 1 to 18 carbon atoms and secondary alkyl radicals having from 3 to 18 carbon atoms and t-alkyl radicals having from 4 to 8 carbon atoms; R⁴ is H, CH₃ or C₂H₅ and A is selected from the radicals: -CH₂-, 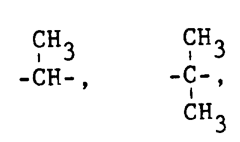 -S- and -O-, and compounds with the structural formula: 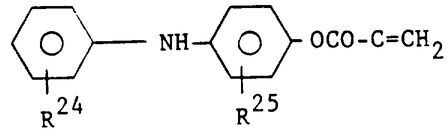 and 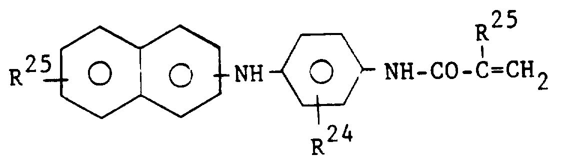 and 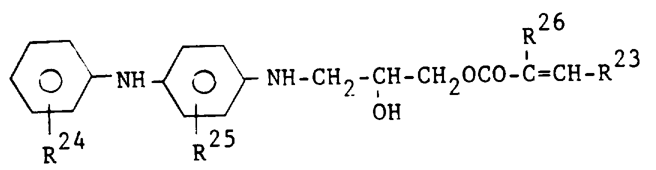 wherein each of R⁴ and R⁵ are alkyl radicals of 1 to 4 carbon atoms, R⁶ is hydrogen or methyl and R³ is hydrogen or phenyl.

7. The process of claim 1 characterized in that an ionic surfactant is used and is present in an amount ranging from 2 to 30 parts by weight of ionic surfactant per 100 parts by weight of organic components.

8. The process of claim 1 characterized in that said carboxylic acid ester is selected from the group consisting of polyethylene glycol dioctoate and a diester of triethylene glycol.

9. The process of claim 1 characterized in that said phosphate is tributoxyethyl phosphate.

## Patentansprüche

1. Verfahren zur Bildung eines Vormischungskautschuks mit Polymergebundener Funktionalität, welches die Emulsionspolymerisation bei einer Temperatur, die von etwa 40°C bis 100°C reicht, von:
(a) mindestens einem funktionalisierten Monomer, das eine Antiabbaumittel-Einheit und eine polymerisierbare Vinyl-Gruppe enthält; mit
(b) mindestens einem copolymerisierbaren konjugierten Dien-Monomer, das ausgewählt ist aus der Gruppe, die aus Butadien-1,3, 2-Chlorbutadien-1,3, Isopren, Piperylen und konjugierten Hexadienen besteht;
umfaßt, worin die Polymerisation in Gegenwart von etwa 10 bis etwa 70 Gewichtsteilen eines Weichmachers, bezogen auf 100 Gewichtsteile Gesamtmonomere, durchgeführt wird; wobei dieser Weichmacher ausgewählt ist aus:
(A) Carbonsäureestern, ausgewählt aus der Gruppe, die aus Diestern von Triethylenglykol, Dibutoxyethoxyethylformiat, Dialkyldietherglutarat, Dibutoxyethyladipat, Dibutoxyethoxyethyladipat, Di-2-ethylhexyladipat, Tetraethylenglykoldiheptanoat, Propylenglykoldibenzoat, Dipropylenglykoldibenzoat, Triethylenglykoldibenzoat, Butyloctylphthalat, Dimethylphthalat, Diethylphthalat, Dibutylphthalat, Dibutoxyethylphthalat, Di-2-ethylhexylphthalat, Tetraethylenglykoldioctoat, Polyethylenglykoldioctoat, Triethylenglykoldi-2-ethylhexanoat, Tetraethylenglykoldi-2-ethylhexanoat, Triethylenglykolcaprat-caprylat, Triethylenglykoldi (caprat-caprylat), Triethylenglykoldipelargonat, Dibutylsebacat, Dibutoxyethylsebacat, Di-2-ethylhexylsebacat, Dioctylsebacat, Diethylenglykolmonolaurat und Butoxyethyloleat besteht; oder
(B) Phosphaten, ausgewählt aus der Gruppe, die aus 2-Ethylhexyldiphenylphosphat, iso-Decyldiphenylphosphat, Tri-n-butylphosphat, Tri(2-ethylhexyl)phosphat, Tributoxyethylphosphat, Trikresylphosphat, Trixylenylphosphat und Trixylylphosphat besteht; oder
(C) Formalen, ausgewählt aus der Gruppe, die aus Dibutoxyethoxyformal und Di(butoxy-ethoxy-ethyl)formal besteht; und
(D) N-Butylbenzolsulfonamid.

2. Verfahren nach Anspruch 1, dadurch gekennzeichnet, daß das Gewichtsverhältnis der Monomerbeschickung von funktionalisiertem Monomer zu konjugiertem Dien-Monomer von 0,10 zu 99,9 bis 99,9 zu 0,10 reicht.

3. Verfahren nach Anspruch 1, dadurch gekennzeichnet, daß zusätzlich zu dem funktionalisierten Monomer und dem copolymerisierbaren konjugierten Dien-Monomer mindestens ein Vinyl-Monomer polymerisiert wird, wobei das Vinyl-Monomer ausgewählt ist aus der Gruppe, die aus Styrol, α-Methylstyrol, Divinylbenzol, Vinylchlorid, Vinylacetat, Vinylidenchlorid, Methylmethacrylat, Ethylacrylat, Vinylpyridin, Acrylnitril, Methacrylnitril, Methacrylsäure, Itaconsäure und Acrylsäure besteht.

4. Verfahren nach Anspruch 3, dadurch gekennzeichnet, daß das Gewichtsverhältnis von funktionalisiertem Monomer zu konjugiertem Dien-Monomer zu Vinyl-Monomer von 5:75:20 bis 95:5:0 Teilen pro hundert Teile, bezogen auf das Gesamtmonomer, reichen kann.

5. Verfahren nach Anspruch 1, dadurch gekennzeichnet, daß mindestens ein funktionalisiertes Monomer aus der Gruppe ist, die besteht aus (a) Amiden mit der Strukturformel: 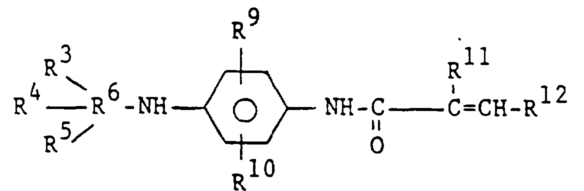 worin R⁶ ein Arylrest ist, R³ und R⁴ ausgewählt sind aus der Gruppe, die aus Wasserstoff, Alkylresten mit 1 bis 4 Kohlenstoffatomen und Alkoxyresten mit 1 bis 4 Kohlenstoffatomen besteht, R⁵ ausgewählt ist aus der Gruppe, die besteht aus Wasserstoff, Alkylresten mit 1 bis 4 Kohlenstoffatomen, Alkoxyresten mit 1 bis 4 Kohlenstoffatomen und einem Rest mit der folgenden Strukturformel: 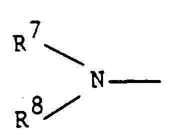 worin R⁷ ausgewählt ist aus der Gruppe, die aus Alkylresten mit 1 bis 12 Kohlenstoffatomen, Cycloalkylresten mit 5 bis 12 Kohlenstoffatomen, Arylresten mit 6 bis 12 Kohlenstoffatomen und Aralkylresten mit 7 bis 13 Kohlenstoffatomen besteht, und R⁸ ausgewählt ist aus der Gruppe, die aus Wasserstoff und Alkylresten mit 1 bis 12 Kohlenstoffatomen besteht; und worin R⁹ und R¹⁰ Wasserstoff oder Alkylreste mit 1 bis 4 Kohlenstoffatomen sind; R¹¹ ausgewählt ist aus der Gruppe, die aus Wasserstoff, Methyl und Ethyl besteht; und R¹ Wasserstoff oder Phenyl ist; und (b) Imiden, die aus der Gruppe ausgewählt sind, die besteht aus (1) Verbindungen mit der folgenden Strukturformel: 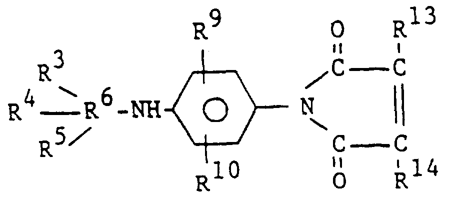 worin R³, R⁴, R⁵, R⁹ und R¹⁰ wie hierin zuvor unter Strukturformel II definiert sind und worin R¹³ und R¹⁴ ausgewählt sind aus der Gruppe, die aus Wasserstoff und Alkylresten mit 1 bis 14 Kohlenstoffatomen besteht, und (2) Verbindungen mit der folgenden Strukturformel: 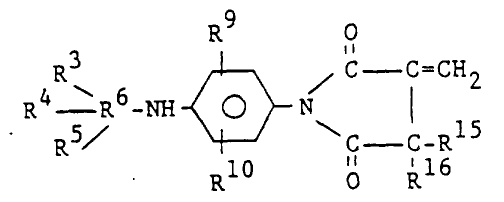 worin R³, R⁴, R⁵, R⁶, R⁹ und R¹⁰ wie hierin zuvor unter Strukturformel I definiert sind und worin R¹⁵ und R¹⁶ ausgewählt sind aus der Gruppe, die aus Wasserstoff und Alkylresten mit 1 bis 4 Kohlenstoffatomen besteht.

6. Verfahren nach Anspruch 1, dadurch gekennzeichnet, daß das funktionalisierte Monomer ausgewählt ist aus der Gruppe von Verbindungen, die durch die Strukturformel: 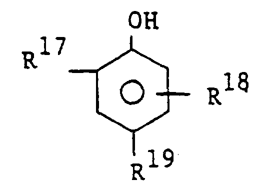 repräsentiert werden, worin R¹⁷ und R¹⁸ ein tert-Alkylrest mit 4 bis 8 Kohlenstoffatomen sind, R¹⁹ ausgewählt ist aus der Gruppe von Resten: 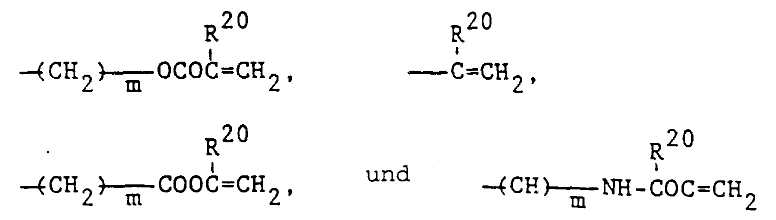 worin R⁰ Wasserstoff oder Methyl ist und m 0 bis 3 ist; und Verbindungen mit der Strukturformel: 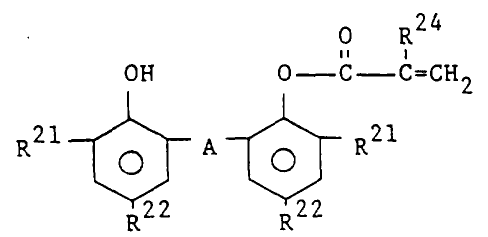 worin R¹ und R ausgewählt sind aus n-Alkylresten mit 1 bis 18 Kohlenstoffatomen und sekundären Alkylresten mit 3 bis 18 Kohlenstoffatomen und t-Alkylresten mit 4 bis 8 Kohlenstoffatomen; R⁴ H, CH₃ oder C₂H₅ ist und A ausgewählt ist aus den Resten: -CH₂-, 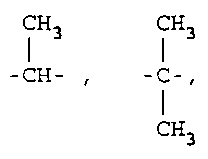 -S- und -O-, und Verbindungen mit der Strukturformel: 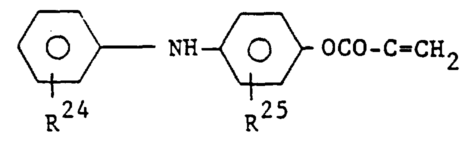 und 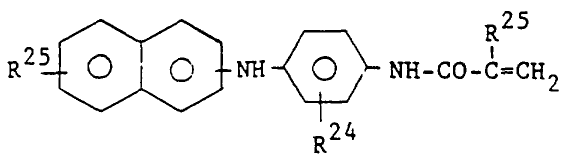 und 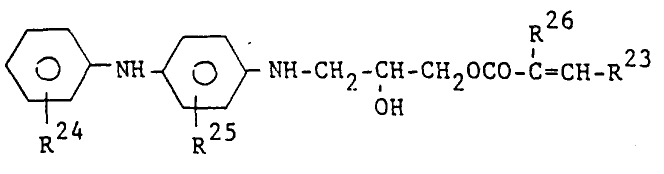 worin R⁴ und R⁵ jeweils Alkylreste mit 1 bis 4 Kohlenstoffatomen sind, R⁶ Wasserstoff oder Methyl ist und R³ Wasserstoff oder Phenyl ist.

7. Verfahren nach Anspruch 1, dadurch gekennzeichnet, daß ein ionisches Tensid verwendet wird und in einer Menge anwesend ist, die von 2 bis 30 Gewichtsteilen ionischem Tensid pro 100 Gewichtsteile organische Bestandteile reicht.

8. Verfahren nach Anspruch 1, dadurch gekennzeichnet, daß der Carbonsäureester ausgewählt ist aus der Gruppe, die aus Polyethylenglykoldioctoat und einem Diester von Triethylenglykol besteht.

9. Verfahren nach Anspruch 1, dadurch gekennzeichnet, daß das Phosphat Tributoxyethylphosphat ist.

## Revendications

1. Procédé pour former un mélange mère de caoutchouc possédant une fonctionnalité liée au polymère, comprenant la polymérisation en émulsion à une température se situant dans le domaine d'environ 40°C à 100°C :
(a) d'au moins un monomère fonctionnalisé qui contient une fraction antidégradante et un groupe vinyle polymérisable; avec
(b) au moins un monomère diénique conjugué copolymérisable choisi parmi le groupe constitué par le butadiène-1,3, le 2-chlorobutadiène-1,3, l'isoprène, le pipérylène et des hexadiènes conjugués;
dans lequel on effectue la polymérisation en présence d'environ 10 à environ 70 parties en poids d'un plastifiant, basées sur 100 parties en poids de la quantité totale des monomères; ledit plastifiant étant choisi parmi :
(A) des esters d'acides carboxyliques choisis parmi le groupe constitué par des diesters de triéthylèneglycol, le formiate de dibutoxyéthoxyéthyle, le glutarate de diéther dialkylique, l'adipate de dibutoxyéthyle, l'adipate de dibutoxyéthoxyéthyle, l'adipate de di-2-éthylhexyle, le diheptanoate de tétraéthylèneglycol, le dibenzoate de propylèneglycol, le dibenzoate de dipropylèneglycol, le dibenzoate de triéthylèneglycol, le phtalate de butyloctyle, le phtalate de diméthyle, le phtalate de diéthyle, le phtalate de dibutyle, le phtalate de dibutoxyéthyle, le phtalate de di-2-éthylhexyle, le dioctoate de tétraéthylèneglycol, le dioctoate de polyéthylèneglycol, le di-2-éthylhexanoate de triéthylèneglycol, le di-2-éthylhexanoate de tétraéthylèneglycol, le caprate-caprylate de triéthylèneglycol, le di(caprate-caprylate) de triéthylèneglycol, le dipélargonate de triéthylèneglycol, le sébacate de dibutyle, le sébacate de dibutoxyéthyle, le sébacate de di-2-éthylhexyle, le sébacate de dioctyle, le monolaurate de diéthylèneglycol et l'oléate de butoxyéthyle; ou
(B) des phosphates choisis parmi le groupe constitué par le 2-éthylhexyldiphénylphosphate, l'iso-décyldiphénylphosphate, le tri-n-butylphosphate, le tri(2-éthylhexyl)-phosphate, le tributoxyéthylphosphate, le tricrésylphosphate, le trixylénylphosphate et le trixylylphosphate; ou
(C) des formals choisis parmi le groupe constitué par le dibutoxyéthoxyformal et le di(butoxy-éthoxy-éthyl)formal; et
(D) le N-butylbenzènesulfonamide.

2. Procédé selon la revendication 1, caractérisé en ce que le rapport pondéral de la charge de monomères du monomère fonctionnalisé au monomère diénique conjugué se situe de 0,10-99,9 à 99,9-0,10.

3. Procédé selon la revendication 1, caractérisé en ce qu'en plus dudit monomère fonctionnalisé et dudit monomère diénique conjugué copolymérisable, on polymérise au moins un monomère vinylique, ledit monomère vinylique étant choisi parmi le groupe constitué par le styrène, par l'α-méthylstyrène, par le divinylbenzène, par le chlorure de vinyle, par l'acétate de vinyle, par le chlorure de vinylidène, par le méthacrylate de méthyle, par l'acrylate d'éthyle, par la vinylpyridine, par l'acrylonitrile, par le méthacrylonitrile, par l'acide méthacrylique, par l'acide itaconique et par l'acide acrylique.

4. Procédé selon la revendication 3, caractérisé en ce que le rapport pondéral du monomère fonctionnalisé au monomère diénique conjugué au monomère vinylique peut se situer de 5:75:20 à 95:5:0 parties par 100 parties basées sur la quantité totale des monomères.

5. Procédé selon la revendication 1, caractérisé en ce qu'au moins un monomère fonctionnalisé est choisi parmi le groupe constitué par
(a) des amides répondant à la formule développée : 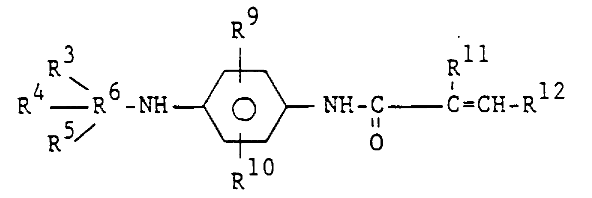 dans laquelle R⁶ représente un radical aryle, R³ et R⁴ sont choisis parmi le groupe constitué par un atome d'hydrogène, par des radicaux alkyle contenant de 1 à 4 atomes de carbone et par des radicaux alcoxy contenant de 1 à 4 atomes de carbone, R⁵ est choisi parmi le groupe constitué par un atome d'hydrogène, par des radicaux alkyle contenant de 1 à 4 atomes de carbone, par des radicaux alcoxy contenant de 1 à 4 atomes de carbone et par un radical répondant à la formule développée ci-après : 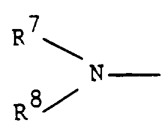 dans laquelle R⁷ est choisi parmi le groupe constitué par des radicaux alkyle contenant de 1 à 12 atomes de carbone, par des radicaux cycloalkyle contenant de 5 à 12 atomes de carbone, par des radicaux aryle contenant de 6 à 12 atomes de carbone et par des radicaux aralkyle contenant de 7 à 13 atomes de carbone, et R⁸ est choisi parmi le groupe constitué par un atome d'hydrogène et par des radicaux alkyle contenant de 1 à 12 atomes de carbone,
et dans laquelle R⁹ et R¹⁰ représentent un atome d'hydrogène ou des radicaux alkyle contenant de 1 à 4 atomes de carbone, R¹¹ est choisi parmi le groupe constitué par un atome d'hydrogène, un radical méthyle et un radical éthyle, et R¹ représente un atome d'hydrogène ou un radical phényle; et
(b) des imides choisis parmi le groupe constitué par (1) des composés répondant à la formule développée ci-après : 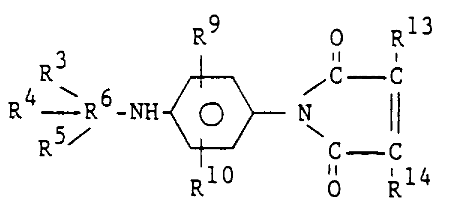 dans laquelle R³, R⁴, R⁵, R⁹ et R¹⁰ sont tels que définis ci-dessus sous la formule développée II, et dans laquelle R¹³ et R¹⁴ sont choisis parmi le groupe constitué par un atome d'hydrogène et par des radicaux alkyle contenant de 1 à 14 atomes de carbone, et par (2) des composés répondant à la formule développée ci-après : 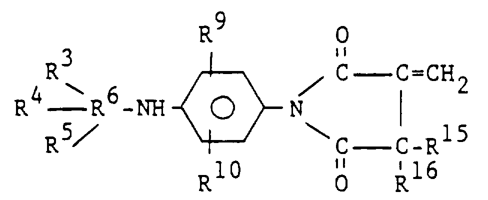 dans laquelle R³, R⁴, R⁵, R⁶, R⁹ et R¹⁰ sont tels que définis ci-dessus sous la formule développée I et dans laquelle R¹⁵ et R¹⁶ sont choisis parmi le groupe constitué par un atome d'hydrogène et par des radicaux alkyle contenant de 1 à 4 atomes de carbone.

6. Procédé selon la revendication 1, caractérisé en ce que le monomère fonctionnalisé est choisi parmi le groupe de composés représentés par la formule développée : 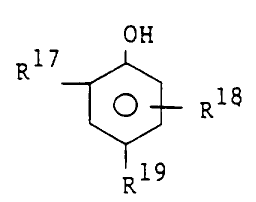 dans laquelle R¹⁷ et R¹⁸ représentent un radical alkyle tertiaire contenant de 4 à 8 atomes de carbone, R¹⁹ est choisi parmi le groupe de radicaux 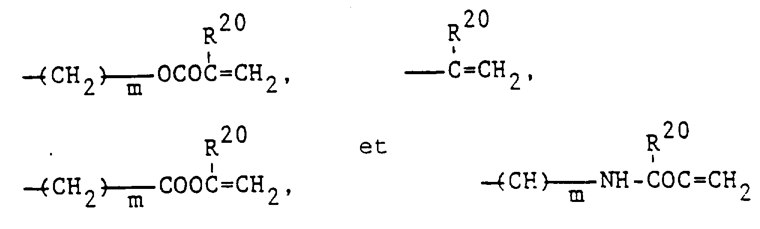 dans lesquels R⁰ représente un atome d'hydrogène ou un radical méthyle et m est égal à 0-3; et des composés répondant à la formule développée : 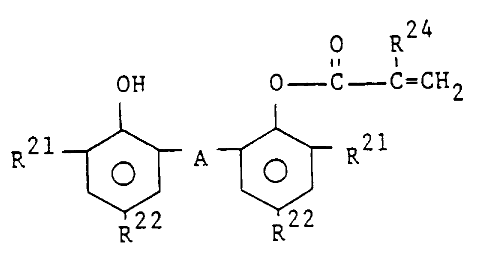 dans laquelle R¹ et R sont choisis parmi des radicaux n-alkyle contenant de 1 à 18 atomes de carbone et par des radicaux alkyle secondaires contenant de 3 à 18 atomes de carbone, et parmi des radicaux alkyle tertiaires contenant de 4 à 8 atomes de carbone; R⁴ représente H, CH₃ ou C₂H₅ et A est choisi parmi les radicaux : -CH₂-, 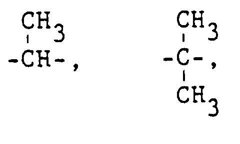 -S- et -O-, des composés répondant à la formule développée : 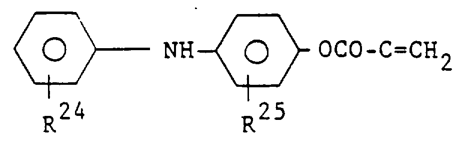 et 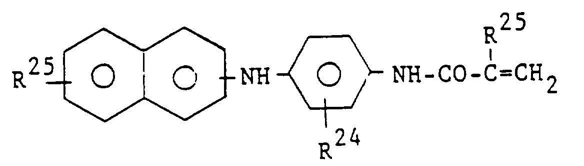 et 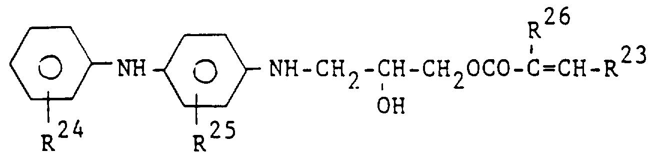 dans lesquelles chacun des radicaux R⁴ et R⁵ représente des radicaux alkyle contenant de 1 à 4 atomes de carbone, R⁶ représente un atome d'hydrogène ou un radical méthyle et R³ représente un atome d'hydrogène ou un radical phényle.

7. Procédé selon la revendication 1, caractérisé en ce qu'on utilise un agent tensioactif ionique présent en une quantité se situant dans le domaine de 2 à 30 parties en poids d'agent tensioactif ionique par 100 parties en poids des composants organiques.

8. Procédé selon la revendication 1, caractérisé en ce que ledit ester d'acide carboxylique est choisi parmi le groupe constitué par le dioctoate de polyéthylèneglycol et par un diester de triéthylèneglycol.

9. Procédé selon la revendication 1, caractérisé en ce que ledit phosphate est le tributoxyéthylphosphate.
